# EUROPEAN PATENT SPECIFICATION

(11) **EP 3 770 810 B1**
(45) Date of publication and mention of the grant of the patent: **30.10.2024**
(21) Application number: 19770276.4
(22) Date of filing: 19.02.2019
(51) Int. Cl.: G06V 10/25, G06V 10/44, G06V 20/10, G06V 10/82, G06V 20/17, G06V 10/764, G06V 10/26

(54) **METHOD AND APPARATUS FOR ACQUIRING BOUNDARY OF AREA TO BE OPERATED, AND OPERATION ROUTE PLANNING METHOD**
VERFAHREN UND VORRICHTUNG ZUR ERFASSUNG DER GRENZE EINES ZU BETREIBENDEN GEBIETES UND VERFAHREN ZUR PLANUNG VON OPERATIONSWEGPLANUNG
PROCÉDÉ ET APPAREIL D'ACQUISITION D'UNE LIMITE D'UNE ZONE À EXPLOITER, ET PROCÉDÉ DE PLANIFICATION D'ITINÉRAIRE D'EXPLOITATION

(30) Priority: 21.03.2018 CN 201810236417
(43) Date of publication of application: 27.01.2021
(73) Proprietor: Guangzhou Xaircraft Technology Co., Ltd, Tianhe District Guangzhou, Guangdong 510000 (CN)
(72) Inventor: DAI, Shuangliang, Guangzhou, Guangdong 510000 (CN)
(74) Representative: HGF
(86) International application number: PCT/CN2019/075456
(87) International publication number: WO 2019/179269

(56) References cited:
- CN-A- 106 585 992
- CN-A- 106 951 836
- CN-A- 107 067 003
- CN-A- 107 316 058
- CN-A- 107 368 094
- CN-A- 107 633 202
- CN-A- 107 784 308
- US-A1- 2017 061 625
- US-A1- 2017 213 109
- PRITT MARK ET AL: "Satellite Image Classification with Deep Learning", 2017 IEEE APPLIED IMAGERY PATTERN RECOGNITION WORKSHOP (AIPR), IEEE, 10 October 2017 (2017-10-10), pages 1 - 7, XP033399294, DOI: 10.1109/AIPR.2017.8457969
- KOHLI D ET AL: "Object-based image analysis for cadastral mapping using satellite images", PROCEEDINGS OF SPIE; [PROCEEDINGS OF SPIE ISSN 0277-786X VOLUME 10524], SPIE, US, vol. 10427, 4 October 2017 (2017-10-04), pages 104270V - 104270V, XP060097146, ISBN: 978-1-5106-1533-5, DOI: 10.1117/12.2280254
- SERTEL ELIF ET AL: "Vineyard parcel identification from Worldview-2 images using object-based classification model", JOURNAL OF APPLIED REMOTE SENSING, SOCIETY OF PHOTO-OPTICAL INSTRUMENTATION ENGINEERS, 1000 20TH ST. BELLINGHAM WA 98225-6705 USA, vol. 8, no. 1, 1 January 2014 (2014-01-01), pages 83535, XP060047091, DOI: 10.1117/1.JRS.8.083535
- RUONAN FU: "Research on Target Detection Based on Deep Learning", INFORMATION SCIENCE & TECHNOLOGY, CHINA MASTER-'S THESES FULL-TEXT DATABASE, 30 June 2017 (2017-06-30), pages 1 - 63, XP055741700, ISSN: 1674-0246

## Description

### Technical Field

The disclosure relates to the technical field of agricultural plant protection, and more particularly, to a method and device for acquiring a boundary of an area to be operated.

### Background

In agricultural plant protection applications, such as pesticide spraying, unmanned aerial vehicles have huge advantages over other agricultural machines, and have been widely used in recent years. Unmanned aerial vehicle plant protection requires precise routes. There are usually two methods for route planning in the conventional art: manual planning and automatic planning based on surveying and mapping data. In the process of automatic planning based on surveying and mapping data, the accuracy of surveying and mapping data directly affects the accuracy and safety of planning flight paths of unmanned aerial vehicles. In the related art, commonly used surveying and mapping data, such as a farmland boundary of an area to be operated, is usually manual surveying and mapping, or, after using a surveying and mapping unmanned aerial vehicle to initially acquire farmland data, it is manually processed to obtain final farmland boundary data to perform operation route planning of unmanned aerial vehicles based on the farmland boundary data. It can be seen that the acquisition of farmland boundary data in the related art is inseparable from manual processing.

In summary, a method for acquiring a farmland boundary in the related art has at least the problem of low efficiency due to the need for manual processing. KOHLI ET AL: "Object-based image analysis for cadastral mapping using satellite images", provides a method to segment a satellite image to identify cadastral boundaries. Two segmentation methods are applied, multi-resolution segmentation and estimation of scale parameter to identify visible cadastral boundaries. SERTEL ELIF ET AL: "Vineyard parcel identification from Worldview-2 images using object-based classification model" performs identification of vineyard parcels based on satellite images. Multilevel segmentation is performed using decision rules.

### Summary

Embodiments of the application provide a method and device for acquiring a boundary of an area to be operated, so as to at least solve the technical problem of low efficiency caused by manual processing in the method for acquiring a boundary of an area to be operated in the conventional art.

The scope of protection conferred is determined from the claims.

In a first aspect, an embodiment of the application provides a method for acquiring a boundary of an area to be operated, which includes the following steps:
an original image is input to a pre-set recognition model, the original image including an area to be operated; a target image output by the pre-set recognition model is acquired; a boundary of the area to be operated is obtained based on the target image.

The pre-set recognition model is a deep learning network model, the deep learning network model includes a convolution module, a deconvolution module, and a feature fusion module, the convolution module comprises a first number of convolution layers, and the deconvolution module includes a second number of deconvolution layers.

The convolution module is configured to extract features of the original image through the first number of convolution layers and output the features to the deconvolution module.

The deconvolution module is configured to perform image feature restoration processing based on the features output by the convolution module through the second number of deconvolution layers.

The feature fusion module is configured to fuse image features obtained by performing image feature restoration processing on each layer of the deconvolution module to obtain an output image.

The convolution layer and the deconvolution layer are connected by a cascade structure, and the deconvolution module is further configured to acquire, through the second number of deconvolution layers, convolution processing information of the convolution layer cascaded with the corresponding deconvolution layer, and obtain a deconvolution result of the corresponding deconvolution layers by superimposing a deconvolution result of an upper layer of the corresponding deconvolution layers and the convolution processing information of the convolution layers cascaded with the corresponding deconvolution layer.

Optionally, each of the convolution layers may extract features of an image input to the convolution layer by performing an expansion operation on the image input to the convolution layer.

Optionally, the deconvolution module may adopt a separable convolution structure.

Optionally, a loss function of the deep learning network model may be:
*loss* = -*β*Σ log *p*(*yⱼ* = 1 | *X*) - (1 - *β*)Σ log(*yⱼ* = 0 | *X*), where loss is a loss value, X is a farmland image sample marked with a target area and a non-target area, β is a ratio of the number of pixels of a target parcel in the image sample X to the total number of pixels of the image sample X, and *p*(*yⱼ* = 1 | *X* ) is an output value of pixel j in the image sample X through an activation function.

Optionally, the step that a boundary of the area to be operated is obtained based on the target image may include that: the target image is detected based on a boundary detection algorithm to determine a boundary of the area to be operated, which is contained in the target image.

Optionally, the step that the target image is detected based on a boundary detection algorithm to determine a boundary of the area to be operated, which is contained in the target image, may include that:
the target image is detected based on a boundary detection algorithm to determine parcel boundary points contained in the target image; and
expansion and smoothing are performed based on the parcel boundary points to determine a boundary of the area to be operated, which is contained in the target image.

Optionally, the step that a boundary of the area to be operated is obtained based on the target image may include that: the target image is detected based on a pre-set detection algorithm to determine a boundary of the area to be operated, which is contained in the target image, the pre-set detection algorithm including one or more of a color detection algorithm, a density detection algorithm, and a multi-spectral detection algorithm.

In a second aspect, an embodiment of the application also provides a device for acquiring a boundary of an area to be operated, which includes:
an original image input module, configured to input an original image to a pre-set recognition model, the original image including an area to be operated;
a target image acquiring module, configured to acquire a target image output by the pre-set recognition model; and
a to-be-operated area boundary acquiring module, configured to obtain a boundary of the area to be operated based on the target image.

The pre-set recognition model is a deep learning network model, the deep learning network model may include a convolution module, a deconvolution module, and a feature fusion module, the convolution module comprises a first number of convolution layers, and the deconvolution module includes a second number of deconvolution layers.

The convolution module is configured to extract features of the original image through the first number of convolution layers and output the features to the deconvolution module.

The deconvolution module is configured to perform image feature restoration processing based on the features output by the convolution module through the second number of deconvolution layers.

The feature fusion module is configured to fuse image features obtained by performing image feature restoration processing on each layer of the deconvolution module to obtain an output image.

The convolution layer and the deconvolution layer is connected by a cascade structure, and the deconvolution module may be further configured to acquire, through the second number of deconvolution layers, convolution processing information of the convolution layer cascaded with the corresponding deconvolution layer, and obtain a deconvolution result of the corresponding deconvolution layers by superimposing a deconvolution result of an upper layer of the corresponding deconvolution layers and the convolution processing information of the convolution layers cascaded with the corresponding deconvolution layer.

Optionally, each of the convolution layers may extract features of an image input to the convolution layer by performing an expansion operation on the image input to the convolution layer.

Optionally, the deconvolution module may adopt a separable convolution structure.

Optionally, a loss function of the deep learning network model may be:
*loss* = -*β*Σ log *p*(*yⱼ* = 1 | *X*) - (1 - *β*)Σ log(*yⱼ* = 0 | *X*), where loss is a loss value, X is an image sample marked with a target area and a non-target area, β is a ratio of the number of pixels of a target parcel in the image sample X to the total number of pixels of the image sample X, and *p*(*yⱼ* = 1 | *X* ) is an output value of pixel j in the image sample X through an activation function.

Optionally, the to-be-operated area boundary acquiring module may be further configured to detect the target image based on a boundary detection algorithm to determine a boundary of the area to be operated, which is contained in the target image.

Optionally, the step that the target image is detected based on a boundary detection algorithm to determine a boundary of the area to be operated, which is contained in the target image, may include that:
the target image is detected based on a boundary detection algorithm to determine parcel boundary points contained in the target image; and
expansion and smoothing are performed based on the parcel boundary points to determine a boundary of the area to be operated, which is contained in the target image.

Optionally, the step that a boundary of the area to be operated is obtained based on the target image may include that: the target image is detected based on a pre-set detection algorithm to determine a boundary of the area to be operated, which is contained in the target image, the pre-set detection algorithm including one or more of a color detection algorithm, a density detection algorithm, and a multi-spectral detection algorithm.

In a third aspect, an example implementation not part of the invention of the application also provides a method for planning operation route, which may include the following steps: An original image for operation route planning is acquired; A boundary of an area to be operated in the original image is acquired by means of the method for acquiring a boundary of an area to be operated according to the embodiment of the application; An operation route of a mobile device in the corresponding area to be operated is determined based on the acquired boundary of the area to be operated.

Optionally, the step that an operation route of a mobile device in the corresponding area to be operated is determined based on the acquired boundary of the area to be operated may include that:
the acquired boundary data of the area to be operated is superimposed into an image of the area to be operated, the image of the area to be operated being an image of an area where the area to be operated is located in the original image; and
an operation route of a mobile device in the area to be operated is determined based on the image of the area to be operated, superimposed with the boundary data of the area to be operated.

Optionally, two nodes at each boundary of the area to be operated may be respectively a first node and a second node. The method may further include the following steps: Any one of the boundaries is determined as a starting boundary, and two nodes of the starting boundary are determined as a starting node and an ending node; Searching is performed using the starting node as a current node, when a first node of any boundary is found to coincide with the current node, a second node of the boundary is determined as a current node to continue searching, and an area defined by all the found boundaries is determined as a candidate area when a second node of any boundary is found to coincide with the ending node; When the candidate area does not contain a boundary, the candidate area is determined as an area to be operated.

Optionally, the method for planning operation route may further include the following steps; The area to be operated is highlighted; In response to a selection operation of a user, an area to be planned in the area to be operated is determined; Route planning is performed for the area to be planned.

In a fourth aspect, an example implementation not part of the invention of the application also provides a device for planning operation route, which may include: an original image acquiring module, configured to acquire an original image for operation route planning; a to-be-operated area boundary acquiring module, configured to acquire a boundary of an area to be operated in the original image by means of the method for acquiring a boundary of an area to be operated according to the embodiment of the application; and an operation route planning module, configured to determine, based on the acquired boundary of the area to be operated, an operation route of a mobile device in the corresponding area to be operated.

Optionally, the operation route planning module may be further configured to: superimpose the acquired boundary data of the area to be operated into an image of the area to be operated, the image of the area to be operated being an image of an area where the area to be operated is located in the original image; and determine an operation route of a mobile device in the area to be operated based on the image of the area to be operated, superimposed with the boundary data of the area to be operated.

Optionally, two nodes at each boundary of the area to be operated may be respectively a first node and a second node. The operation route planning module may be further configured to: determine any one of the boundaries as a starting boundary, and determine two nodes of the starting boundary as a starting node and an ending node; search using the starting node as a current node, when a first node of any boundary is found to coincide with the current node, determine a second node of the boundary as a current node to continue searching, and determine an area defined by all the found boundaries as a candidate area when a second node of any boundary is found to coincide with the ending node; and when the candidate area does not contain a boundary, determine the candidate area as an area to be operated.

Optionally, the operation route planning module may be further configured to: highlight the area to be operated; determine, in response to a selection operation of a user, an area to be planned in the area to be operated; and perform route planning for the area to be planned.

In this way, in the method for acquiring a boundary of an area to be operated disclosed in the embodiment of the application, an original image is input to a pre-set recognition model, the original image including an area to be operated; a target image output by the pre-set recognition model is acquired; and a boundary of the area to be operated is obtained based on the target image. The problem of low efficiency in the conventional art in which a farmland image needs to be manually processed to obtain a farmland boundary is solved. By combining a deep learning network model, the boundary of the area to be operated in the image is acquired for further use in operation route planning. The boundary of the area to be operated can be automatically recognized and operation route routing can be automatically carried out without manual participation. The boundary of the area to be operated can be acquired in real time, and the efficiency of acquiring the boundary of the area to be operated is effectively improved.

### Brief Description of the Drawings

In order to more clearly illustrate the technical solutions in the embodiments of the application, the drawings used in the description of the embodiments of the application will be briefly described below. It is apparent that the drawings in the following description are only some embodiments of the application, and other drawings may be obtained from those skilled in the art according to these drawings without any creative work.
Fig. 1 is a flowchart of a method for acquiring a boundary of an area to be operated according to Embodiment 1 of the application;
Fig. 2 is a schematic diagram of an original image according to Embodiment 1 of the application;
Fig. 3 is a schematic diagram of a target image output after the original image shown in Fig. 2 is processed by a deep learning network model;
Fig. 4 is a flowchart of a method for acquiring a boundary of an area to be operated according to Embodiment 2 of the application;
Fig. 5 is a schematic diagram of an original farmland image acquired in Embodiment 2 of the application;
Fig. 6 is a schematic diagram of the original farmland image shown in FIG. 5 after being marked with a farmland area and a non-farmland area;
Fig. 7 is a schematic structural diagram of a deep learning network model in Embodiment 2 of the application;
Fig. 8 is a flowchart of a method for planning operation route according to Embodiment 3 of the application;
Fig. 9 is a schematic diagram of the original image shown in Fig. 2 superimposed with a farmland boundary;
Fig. 10 is a schematic structural diagram of a device for acquiring a boundary of an area to be operated according to Embodiment 4 of the application; and
Fig. 11 is a schematic structural diagram of a device for planning operation route according to Embodiment 5 of the application.

### Detailed Description of the Embodiments

In order to make those skilled in the art better understand the solutions of the application, the technical solutions in the embodiments of the application will be clearly and completely described below with reference to the drawings in the embodiments of the application.

It is to be noted that the specification and claims of the application and the terms "first", "second" and the like in the drawings are used to distinguish similar objects, and do not need to describe a specific sequence or a precedence order. It will be appreciated that data used in such a way may be exchanged under appropriate conditions, in order that the embodiments of the application described here can be implemented in a sequence other than sequences graphically shown or described here. In addition, terms "include" and "have" and any variations thereof are intended to cover non-exclusive inclusions. For example, it is not limited for processes, methods, systems, products or devices containing a series of steps or units to clearly list those steps or units, and other steps or units which are not clearly listed or are inherent to these processes, methods, products or devices may be included instead.

### Example implementation not part of the invention 1: 1:

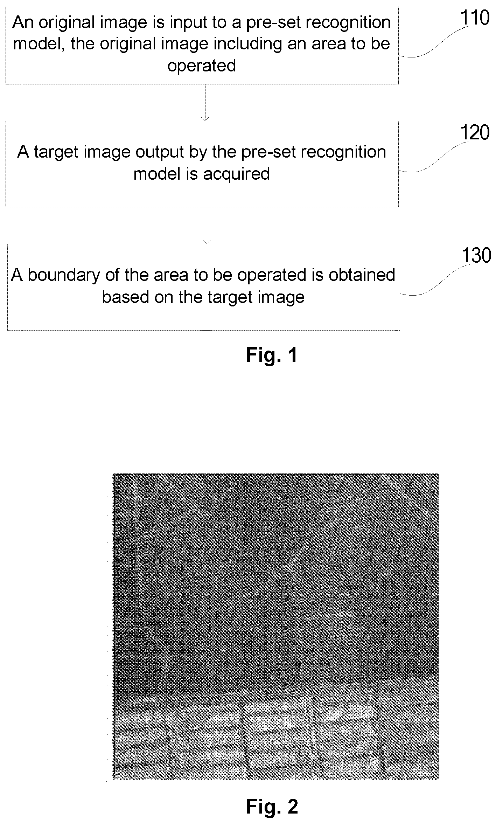

As shown in Fig. 1, an an example implementation not part of the application discloses a method for acquiring a boundary of an area to be operated. The method includes step 110 to step 130.

In step 110, an original image is input to a pre-set recognition model, the original image including an area to be operated.

The original image in the embodiment of the application is an image including an area to be operated of a mobile device, and the original image may be a high-definition map image acquired by a surveying and mapping mobile device or satellite. The area to be operated may be farmland blocks, orchards, ponds, etc. The pre-set recognition model may be a deep learning network model or a pre-set recognition algorithm process, such as performing image segmentation processing on an image, performing image grayscale transformation, image feature recognition, and image binary processing. A line in the image may be detected by a hough detection algorithm. Of course, in other embodiments, a sobel detection algorithm may also be used.

The mobile device includes unmanned aerial vehicles, aircrafts, tractors, cultivators, harvesters, and intelligent robots. The unmanned aerial vehicles may be used to spray pesticides, fertilizers, and seeds in areas to be operated. The tractors, the cultivators and the harvesters may be used to cultivate and harvest farmlands. The intelligent robots may perform automatic picking, cotton sharpening, laser weeding and insect removal in areas to be operated.

A farmland operation of an unmanned aerial vehicle for a village is taken as an example. A high-definition map image of the village may be first acquired as an original image through a satellite. As shown in Fig. 2, a farmland block in Fig. 2 includes an area to be operated. Then, the acquired original image is input to the pre-set recognition model.

In step 120, a target image output by the pre-set recognition model is acquired.

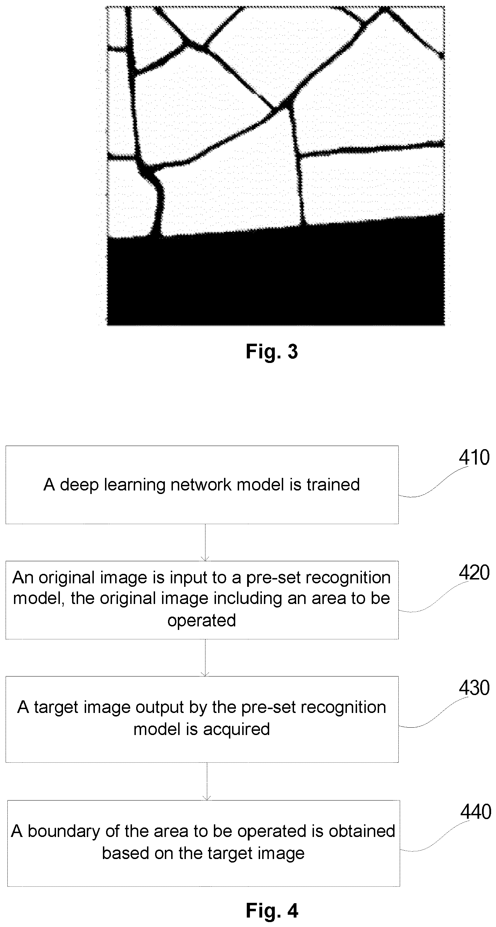

The original image may be recognized through a pre-set algorithm or network model to obtain a specific target image, for example, to form a specific binary image. For a parcel, in one embodiment of the application, a white area in an output image represents a parcel, and a black area represents a non-parcel. The pre-set recognition model may be a deep learning network model. The deep learning network model is used to convolve and restore an input original image to extract pre-set features (such as farmland boundary features) in the input image, and then, generate a target image from the extracted pre-set features. The output target image information is more pure, including a clear boundary of the area to be operated, as shown in Fig. 3.

In step 130, a boundary of the area to be operated is obtained based on the target image.

After a target image of an original image is obtained, block boundary information in the target image may be acquired by an image vision processing method in the conventional art. Optionally, by expanding and smoothing the block boundary information and then performing closed block detection, a boundary of the area to be operated may be determined.

In the method for acquiring a boundary of an area to be operated disclosed in the embodiment of the application, an original image is input to a pre-set recognition model, the original image including an area to be operated; a target image output by the pre-set recognition model is acquired; and a boundary of the area to be operated is obtained based on the target image. The problem of low efficiency in the conventional art in which an original image needs to be manually processed to obtain a boundary of an area to be operated is solved. By means of the pre-set recognition model, the boundary of the area to be operated in the image is acquired for further use in operation route planning. The boundary of the area to be operated can be automatically recognized and operation route routing can be automatically carried out without manual participation. The boundary of the area to be operated can be acquired in real time, and the efficiency of acquiring the boundary of the area to be operated is effectively improved.

### Preferred embodiment:

As shown in Fig. 4, an embodiment of the application discloses a method for acquiring a boundary of an area to be operated. The method includes step 410 to step 440.

In step 410, a deep learning network model is trained.

The application is applied to route planning of a plant protection mobile device for processing an area to be operated to acquire a boundary of the area to be operated, so as to facilitate operation route planning of the area to be operated according to the boundary of the area to be operated. Therefore, before applying this method, a deep learning network model needs to be trained. The method for acquiring a boundary of an area to be operated disclosed in the embodiment of the application is applicable to various types of areas to be operated, such as farmlands, orchards, and lakes. In the present embodiment, an implementation scheme of the method for acquiring a boundary of an area to be operated is specifically described by taking a farmland as the area to be operated.

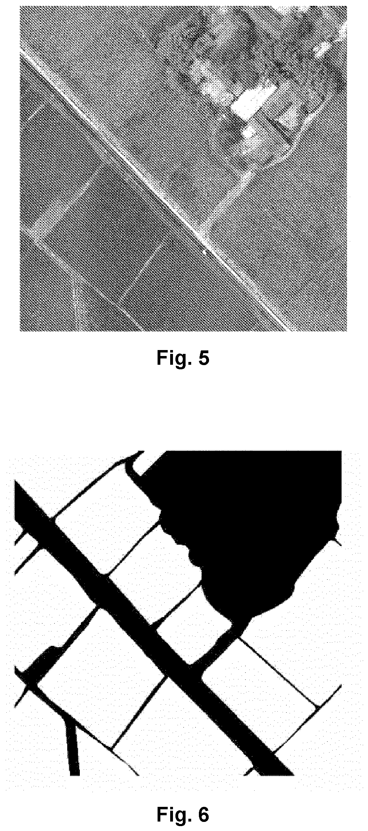

First, a high-definition map image is acquired using a surveying and mapping mobile device or satellite to obtain an original farmland image, as shown in Fig. 5.

Then, a farmland area in the original farmland image is manually marked. The marking mode is to separate the farmland from the original farmland image. For example, a farmland area in the original farmland image is marked as white, a non-farmland area is marked as a black background, and an image shown in Fig. 6 is obtained after marking. The farmland area is covered with vegetation, which is an operation range. The non-farmland area is an area of villages, rivers, roads, etc., which is a non-operation range. The corresponding operation range in the original farmland image is a range covered by an operation route of the mobile device. In specific implementation, the farmland area in the original farmland image may be marked as black, and the non-farmland area may be marked as white. In the embodiment of the application, the color of marking the farmland area in the original farmland image is only for distinguishing the farmland area from the non-farmland area, and the color value has no practical meaning.

Finally, the original farmland image and the farmland image formed by manually marking the farmland area and the non-farmland area are used as training samples, and supervised training is carried out to train a neural network model. The training sample after marking the farmland area contains information such as the shape and distribution of the farmland area. By using a large number of original farmland images and farmland images marked with farmland areas as training samples of the neural network model, the deep learning network model may be trained. The training process of the deep learning network model is actually the process of solving parameters of the deep learning network model.

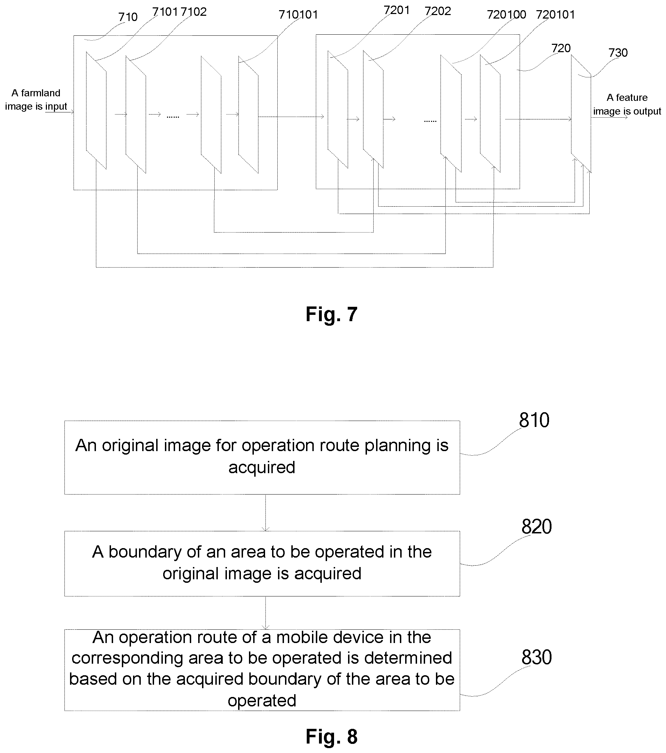

In specific implementation, as shown in Fig. 7, the deep learning network model includes a convolution module 710, a deconvolution module 720, and a feature fusion module 730. The convolution module 710 includes a first number of convolution layers. The deconvolution module 720 includes a second number of deconvolution layers. The convolution module 710 is configured to extract features of the original image through the first number of convolution layers and output the features to the deconvolution module 720. The deconvolution module 720 is configured to perform image feature restoration processing based on the features output by the convolution module 710 through the second number of deconvolution layers. The feature fusion module 730 is configured to fuse image features obtained by performing image feature restoration processing on each layer of the deconvolution module 720 to obtain an output image. When the features of the image are extracted by the convolution module 710, as the number of convolution layers increases, more extracted features correspond to more lost information. When the deconvolution module 720 restores features of a picture, as the number of convolution layers increases, more and more features are restored.

The convolution layer and the deconvolution layer are connected by a cascade structure, and the deconvolution module 720 is further configured to acquire, through the second number of deconvolution layers, convolution processing information of the convolution layer cascaded with the corresponding deconvolution layer, and obtain a deconvolution result of the corresponding deconvolution layer by superimposing a deconvolution result of an upper layer of the corresponding deconvolution layer and the convolution processing information of the convolution layer cascaded with the corresponding deconvolution layer. The first number may be equal to the second number, or may be smaller than the second number. The deep neural network may be a residual network.

Due to the requirements of plant protection accuracy of mobile devices, when selecting a network structure of the deep learning network model, there may be sufficient network parameters to extract the features of the farmland image, and it is also ensured that more precise farmland location information can be extracted. Therefore, in the embodiment of the application, a 101-layer Convolutional Neural Network (CNN) structure is used to ensure a sufficient amount of parameters, which can extract farmland boundary features based on any background or any shape. In specific implementation, the deep learning neural network in the embodiment of the application is a neural network with a RESNET101 convolution structure. That is, the convolution module 710 includes 101 convolution layers, and the deconvolution module 720 includes 101 deconvolution layers. The input farmland image is convolved by the convolution module 710. Each convolution layer down-samples an input image of a current layer to extract image features and output the image features to the next convolution layer until the desired farmland image features are obtained.

In a CNN, the value of each element in a convolution kernel is the weight of the CNN. In each convolution layer, a convolution operation on an image is actually seeking the output of each neuron, but the result of convolution is biased, and adopts an activation function. One convolution kernel corresponds to one neuron, and an image is used by the same convolution kernel multiple times in different areas to obtain a feature plane, that is, a feature map of the convolved image, and also an input convolution image of the lower convolution layer. For example, the convolution layer 7101 down-samples an input original farmland image Image to obtain a convolution image Image1 and outputs it to the convolution layer 7102. The convolution layer 7102 down-samples the input convolution image Image1 to obtain a convolution image Image2 that is output to the convolution layer 7103, and so on, until the lowermost convolution layer 710101 down-samples an input convolution image Image100 to obtain a convolution image Image101 that is output to the uppermost deconvolution layer 7201 of the deconvolution module. The image features output to the deconvolution module 720 are farmland image features that need to be retained. In specific implementation, if there are fewer convolution layers, too many interference features will be retained, which is not conducive to training an accurate deep learning network model. However, if there are many convolution layers, the extracted farmland features are too fine, which will increase the data processing capacity of the deep learning network model. At the same time, too high recognition accuracy will reduce the robustness of farmland image recognition. The neural network with a RESNET101 convolution structure adopted in the application may improve the robustness of farmland image recognition under the condition of satisfying the accuracy of farmland boundary recognition.

Then, an image is filled layer by layer through the deconvolution layer, and the farmland image features extracted through the convolution module 710 are adjusted and filled until the lowermost deconvolution layer outputs a target farmland image with the same size as the original farmland image. The target farmland image includes key features of the farmland image, namely farmland boundary information. For example, by filling a convolution image Image101 through the deconvolution layer 7201, a deconvolution image Image100' with a pixel size doubled may be obtained, by filling the deconvolution image Image100' through the deconvolution layer 7202, a deconvolution image Image99' with a pixel size doubled may be obtained, and so on, until the lowermost deconvolution layer 720101 down-samples an input deconvolution image Image101' to obtain a target farmland image Image' with the same size as an original farmland image Image. The target farmland image Image' includes farmland area information and non-farmland area information. If a farmland area is represented by white and a non-farmland area is represented by black, the target farmland image Image' will be a black-and-white image, and key features in the original farmland image, i.e., farmland boundary features, are retained.

In specific implementation, the deconvolution module may adopt bilinear adaptive sampling and ordinary convolution. In order to acquire more farmland image information and ensure the accuracy of boundary recognition, preferably, the convolution layer and the deconvolution layer are connected by a cascade structure, and the deconvolution layer acquires convolution processing information of the corresponding convolution layer through the cascade structure. The cascade structure refers to a layer-by-layer connection structure between convolution layers, between deconvolution layers, and between convolution layers and corresponding deconvolution layers. As shown in Fig. 7, the convolution layer 7101 is simultaneously output to the convolution layer 7102 and the deconvolution layer 720101. The deconvolution layer 720101 is connected to the outputs of the convolution layers 7101 and the deconvolution layer 720100.

The deconvolution layer superimposes a deconvolution result of an upper layer and the convolution processing information of the corresponding convolution layer to obtain a deconvolution result of the deconvolution layer. For example, for the current deconvolution layer, if the feature information of the upper deconvolution layer is a 36x36x64 feature map, the feature information of the convolution layers connected to the current deconvolution layer is 36x36x48. Then, after a feature map of the feature information of the upper deconvolution layer of the current deconvolution layer and a feature map of the corresponding convolution layer are superimposed, an obtained feature map of the feature information of the current deconvolution layer is 36x36x112. In the specific implementation of the application, the deep learning network model adopts a cascade structure, that is, a transmission line is connected from the convolution layer to the deconvolution layer, which is used to transfer the data processing information of the convolution layers to the corresponding deconvolution layer. In a deep learning network model of a cascade structure in the application, in the process of deconvolution processing, a farmland image feature map obtained by a convolution layer and a farmland image feature map obtained by a higher deconvolution layer are superimposed in a concat (concatenation) way, and then the next layer of deconvolution processing is performed. In combination with fine information of an original image lost in the process of convolution, location information of a real farmland in the original image can be accurately restored, and the details of a farmland boundary can be more retained. The difference between the deep learning network model in the application and a general neural network structure in the conventional art is that a convolution layer is cascaded from a corresponding deconvolution layer to obtain image information lost in the convolution process.

Preferably, the convolution module adopts a hollow convolution structure.

In the specific implementation, in order to be able to extract a farmland based on any background or any shape, and to improve the effect of accurately restoring the location information of a real farmland in the original farmland image by the deconvolution module, each convolution layer of the convolution module adopts hollow convolution. Each of the convolution layers extract features of an image input to the convolution layer by performing an expansion operation on the image input to the convolution layer. The similarity between the hollow convolution and the ordinary convolution is that the size of the convolution kernel is the same. In the neural network, the number of parameters does not change. The difference is that the hollow convolution has a larger receptive field. The receptive field is the size of the convolution kernel shown on the image. For example, the size of the receptive field of a 3×3 convolution kernel is 9. By using hollow convolution, the field of view of the convolution kernel can be effectively increased. A 3×3 convolution kernel with an expansion rate of 2 has a receptive field that is the same as a 5×5 convolution kernel, and only 9 parameters are required. In specific implementation, the application sets a hollow coefficient to 2, that is, by setting the expansion coefficient of the expansion operation to 2, the receptive field is doubled, and the loss of details of an original picture is minimized as much as possible. At the same time, the use of hollow convolution can obtain a larger receptive field without increasing the consumption of computing resources, which is conducive to real-time acquisition of farmland boundaries.

Preferably, the deconvolution module 720 adopts a separable convolution structure.

In a separable convolution structure, the convolution kernel operation can be split into multiple steps. A convolution process of a convolution layer with a 3×3 size, an input channel of 16 and an output channel of 32 is taken as an example. In the convolution process, 32 convolution kernels with a 3×3 size will traverse each data in 16 channels, thus generating 16×32=512 feature maps. Optionally, one feature map is obtained by superimposing and fusing the feature map corresponding to each input channel, and finally feature maps corresponding to the required 32 output channels can be obtained. In the process of convolution, 16×32×3×3=4608 parameters are used. The separable convolution structure is adopted. In specific implementation, one 3×3 convolution kernel may be used to traverse data of 16 channels to obtain 16 feature maps. Then, 32 1×1 convolution kernels may be used to traverse 16 feature maps for addition and fusion to obtain feature maps corresponding to 32 output channels. It can be seen that in the process of convolving an image with a separable convolution structure, 16×3×3+16×32×1×1=656 parameters are used, which is far less than 16×32×3×3=4608 parameters of the general convolution structure. The application can effectively improve the running speed of the trained deep learning network model by adopting the separable convolution structure.

In the model training process, model parameters are optimized by minimizing a loss function of the last layer of the deep learning network model. Preferably, a loss function of the deep learning network model is: *loss* = -*β*Σ log *p*(*yⱼ* = 1 | *X*) - (1 - *β*)Σ log(*yⱼ* = 0 | *X*), where loss is a loss value, X is an image sample marked with a target area and a non-target area, β is a ratio of the number of pixels of a target parcel in the image sample X to the total number of pixels of the image sample X, and *p*(*_{yj}* = 1 | *X* ) is an output value of pixel j in the image sample X through an activation function. Specifically in the present embodiment, the target area is a farmland area, and the target parcel is a farmland parcel. In specific implementation, the activation function is a sigmod function. The loss function of the deep learning network model is used to measure the target farmland image corresponding to the original image output by the model. Corresponding to the original farmland image, the error of a test farmland image marked with a farmland area and a non-farmland area is adjusted. During the training process, the parameters of the convolution layers are adjusted by back propagation and gradient descent, and the value of the loss function is further adjusted to determine optimal convolution layer parameters. In specific implementation, it may be set that the model parameter is optimal when the loss value loss satisfies a pre-set condition. For example, the model parameter is optimal when the loss value loss is minimum.

The optimal parameters of the model are determined, that is, the training process of the model is completed. So far, the training process of training a deep learning network model based on a farmland image is completed.

In step 420, an original image is input to a pre-set recognition model, the original image including an area to be operated.

One embodiment in the specific application process is to use the original image containing the area to be operated as the input of the trained deep learning network model, and the model will recognize boundary information of the area to be operated in the original image.

For example, when a plant protection team is working, control personnel with a ground station in hand may obtain a high-definition map near the plant protection team through positioning information, and may manually frame an original image area, as shown in Fig. 2. Then, the deep learning network model is called to recognize the manually selected original image to obtain a boundary of an area to be operated in the manually selected field block. Or, an original image is defined by a cloud control center. The deep learning network model is called to recognize the original image defined by the cloud control center, so as to acquire a boundary of an area to be operated in the original image defined by the cloud control center.

In step 430, a target image output by the pre-set recognition model is acquired.

In an optional embodiment of the application, when the pre-set recognition model is a deep learning network model, the deep learning network model is used to convolve and restore an input original image to extract pre-set features (such as farmland boundary features) in the input image, and then, generate a target image from the extracted pre-set features. The output target image information is more pure, including a clear boundary of the area to be operated, as shown in Fig. 3.

The farmland boundary feature map in the area to be operated output by the deep learning network model is shown in Fig. 3. The white area is a farmland area and the black area is a non-farmland area. Colours of the Black area and the white area in Fig.3 have no actual meaning, just to distinguish different areas. In the specific implementation of the application, if the farmland area is marked as black and the non-farmland area as white when the sample is marked, in the farmland boundary feature map in the area to be operated output by the model, the farmland area is black and the non-farmland area is white.

In specific implementation, each deconvolution layers of the deep learning network model will output the feature map of the farmland image. In the application, the output of the lowermost deconvolution layers is selected as the output of the model. The farmland boundary information included in the output of the lowermost deconvolution layers is also more pure.

In step 440, a boundary of the area to be operated is obtained based on the target image.

In specific implementation, the step that a boundary of the area to be operated is obtained based on the target image includes that: the target image is detected based on a boundary detection algorithm to determine a boundary of the area to be operated, which is contained in the target image. Optionally, the step that the target image is detected based on a boundary detection algorithm to determine a boundary of the area to be operated, which is contained in the target image includes that: the target image is detected based on a boundary detection algorithm to determine parcel boundary points contained in the target image; and expansion and smoothing are performed based on the parcel boundary points to determine a boundary of the area to be operated, which is contained in the target image.

In other embodiments, the step that a boundary of the area to be operated is obtained based on the target image includes that: the target image is detected based on a pre-set detection algorithm to determine a boundary of the area to be operated, which is contained in the target image, the pre-set detection algorithm including one or more of a color detection algorithm, a density detection algorithm, and a multi-spectral detection algorithm. For example, a rape flower parcel and a wheat parcel may be distinguished according to a color detection algorithm. For another example, a wheat parcel and a corn parcel may be distinguished according to a density detection algorithm, thereby distinguishing a boundary between different vegetation.

After a target image of an original image is obtained, block boundary information in the target image may be acquired by an image vision processing method in the conventional art. After obtaining the farmland boundary feature image, the location information of the boundary of the farmland area may be obtained by a traditional visual boundary detection algorithm (for example, an edge detection method such as Canny operator). The information of boundary points may be stored in an (x, y) format. x represents the number of pixels from a boundary point to a left boundary of an image, and y represents the number of pixels from the boundary point to an upper boundary. Optionally, by expanding and smoothing the block boundary information and performing deburring, smooth and continuous boundary lines may be obtained.

In the method for acquiring a boundary of an area to be operated disclosed by the embodiment of the application, a deep learning network model is trained based on an original image including an area to be operated; and then, a boundary of the area to be operated in the currently input original image is acquired by means of a deep learning network model. The problem of low efficiency in the conventional art in which a farmland image needs to be manually processed to obtain a farmland boundary is solved. Based on the deep learning network model, the image including the area to be operated is input to the pre-trained deep learning network model when needing to perform operation route planning on the area to be operated. The deep learning network model acquires the boundary of the area to be operated in the image for further use in operation route planning. The boundary of the area to be operated can be automatically recognized and operation route routing can be automatically carried out without manual participation. The boundary of the area to be operated can be acquired in real time, and the efficiency of acquiring the boundary of the area to be operated is effectively improved.

### Example implementation not part of the invention 2:

As shown in Fig. 8, an an example implementation not part of the application discloses a method for planning operation route for a mobile device. The method includes step 810 to step 830.

In step 810, an original image for operation route planning is acquired.

In specific implementation, when a plant protection team is working, control personnel with a ground station in hand may obtain pictures or map information near the plant protection team through positioning information. The control personnel with a ground station in hand may also directly take photos and manually frame a map range including an area to be operated, or, a cloud control center defines a map range including an area to be operated to determine an original image used for operation route planning.

In step 820, a boundary of an area to be operated in the original image is acquired.

Then, the acquired original image including the area to be operated for operation route planning is input to a pre-trained pre-set recognition model, and the pre-set recognition model outputs a feature image including the boundary of the area to be operated in the image of the area to be operated. The pre-set recognition model may be a deep learning network model. For the specific training process and method of the deep learning network model, reference is made to the corresponding steps in Embodiment 2, and details are not described in the present embodiment.

As shown in Fig. 2, for example, to acquire an original image for operation route planning, the original image including the area to be operated shown in Fig. 2 is input to a pre-trained deep learning network model, and the deep learning network model outputs a feature image including the boundary of the area to be operated as shown in Fig. 3. The output image of the model contains information of the area to be operated, that is, parcel information. The output of the deep learning network model is an image, and the background and the target in the image are relatively pure. The target is the area to be operated, and the other areas are the background. As shown in Fig. 3, white is the farmland area (that is, the area to be operated), and black is the non-farm land area.

In step 830, an operation route of a mobile device in the corresponding area to be operated is determined based on the acquired boundary of the area to be operated. In some embodiments of the application, "determination" includes, but is not limited to, operations such as planning and drawing, but the application is not limited thereto.

In specific implementation, the step that an operation route of a mobile device in the corresponding area to be operated is determined based on the acquired boundary of the area to be operated includes that: the acquired boundary data of the area to be operated is superimposed into an image of the area to be operated, the image of the area to be operated being an image of an area where the area to be operated is located in the original image; and an operation route of a mobile device in the area to be operated is determined based on the image of the area to be operated, superimposed with the boundary data of the area to be operated.

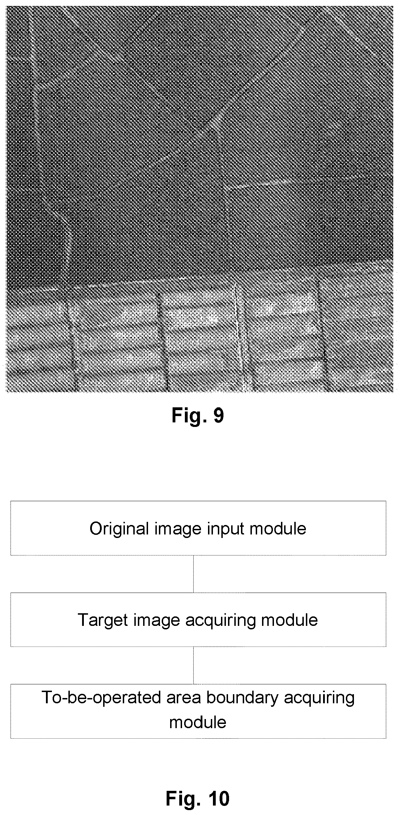

After obtaining the farmland boundary feature image, the location information of the boundary of the farmland area may be obtained by a traditional visual boundary detection algorithm (for example, an edge detection method such as Canny operator). The information of boundary points may be stored in an (x, y) format. x represents the number of pixels from a boundary point to a left boundary of an image, and y represents the number of pixels from the boundary point to an upper boundary. Then, the boundary points of the farmland boundary are superimposed into the original image. Specifically in the present example implementation the obtained boundary points of the farmland boundary are superimposed into the original farmland image as shown in Fig. 2 to obtain a farmland image as shown in Fig. 9. In Fig. 9, the boundary lines between the white narrow area and the black wider area are the farmland boundaries (that is, the boundary of the area to be operated) superimposed on the original farmland image. In specific implementation, it is possible to superimpose farmland boundary data into the original farmland image by setting a pixel at a location corresponding to the determined farmland boundary in the original farmland image to a pre-set value. the boundary lines between the white narrow area and the black wider area in Fig. 9 are only for highlighting the farmland boundary. In specific implementation, the boundary lines may also be set to different colors, such as red, yellow and black.

In specific implementation, in order to improve the accuracy of operation route planning, only complete parcels in the original image are subjected to operation route planning. Therefore, the complete parcels in the original image are first determined. Two nodes at each boundary of the area to be operated are respectively a first node and a second node. The method further includes that: any one of the boundaries is determined as a starting boundary, and two nodes of the starting boundary are determined as a starting node and an ending node. Searching is performed using the starting node as a current node, when a first node of any boundary is found to coincide with the current node, a second node of the boundary is determined as a current node to continue searching, and an area defined by all the found boundaries is determined as a candidate area when a second node of any boundary is found to coincide with the ending node. When the candidate area does not contain a boundary, the candidate area is determined as an area to be operated. According to the coordinates of the boundary of the area to be operated, the boundary connected end to end can be determined, a closed parcel is composed of multiple boundaries connected end to end, and there is no boundary. Then, the closed parcel may be used as the area to be operated.

For the image of the area to be operated on which the farmland boundary information is superimposed, operation route planning of the mobile device may be further carried out through the route planning method for a mobile device in the related art, which will not be repeated in the embodiments of the application.

In specific implementation, after a closed area to be operated is determined, the method further includes that: the area to be operated is highlighted; in response to a selection operation of a user, an area to be planned in the area to be operated is determined; and route planning is performed for the area to be planned. For a farmland image, it may usually include multiple complete parcels, all of which may be used as the area to be operated. In order to facilitate an operator to select the field block intuitively and accurately for the operation, after an area to be operated is determined, the area to be operated may be displayed by highlighting, flashing, or other display modes to prompt a user to select. Then, in response to the selection operation of the user, an area to be planned in the area to be operated is determined. Finally, the area to be planned selected by the user is subjected to route planning.

In the method for planning operation route disclosed by the embodiment of the application, an original image for operation route planning is acquired; a boundary of an area to be operated in the original image is acquired by means of a pre-trained deep learning network model; and an operation route of a mobile device in the corresponding area to be operated is determined based on the acquired boundary of the area to be operated. The problem of low efficiency in the conventional art in which a farmland image needs to be manually processed to obtain a farmland boundary is solved. By means of the pre-trained deep learning network model, boundary information of the area to be operated in the image can be obtained in real time, and the operation route planning of the mobile device can be carried out in real time, which effectively improves the real-time performance and efficiency of operation route planning of the mobile device. In the conventional art, the area to be operated can only be surveyed and mapped first, then route planning is carried out, and the plant protection task is performed. By means of the method for planning operation route for a mobile device disclosed in the application, it is not necessary to survey and map an area to be operated in advance, an image of the area to be operated can be collected in real time, and route planning and plant protection tasks are simultaneously performed, which effectively improves the efficiency of plant protection operations. As part of the preferred embodiment, referring to Fig. 10, the application also discloses a device for acquiring a boundary of an area to be operated, which includes: an original image input module 1010, a target image acquiring module 1020, and a to-be-operated area boundary acquiring module 1030.

The original image input module 1010 is configured to input an original image to a pre-set recognition model, the original image including an area to be operated.

The target image acquiring module 1020 is configured to acquire a target image output by the pre-set recognition model.

The to-be-operated area boundary acquiring module 1030 is configured to obtain a boundary of the area to be operated based on the target image.

The pre-set recognition model is a deep learning network model. The deep learning network model includes a convolution module, a deconvolution module, and a feature fusion module. The convolution module includes a first number of convolution layers. The deconvolution module includes a second number of deconvolution layers. The convolution module is configured to extract features of the original image through the first number of convolution layers and output the features to the deconvolution module. The deconvolution module is configured to perform image feature restoration processing based on the features output by the convolution module through the second number of deconvolution layers. The feature fusion module is configured to fuse image features obtained by performing image feature restoration processing on each layer of the deconvolution module to obtain an output image.

The convolution layer and the deconvolution layer are connected by a cascade structure, and the deconvolution module is further configured to acquire, through the second number of deconvolution layers, convolution processing information of the convolution layer cascaded with the corresponding deconvolution layer, and obtain a deconvolution result of the corresponding deconvolution layers by superimposing a deconvolution result of an upper layer of the corresponding deconvolution layers and the convolution processing information of the convolution layers cascaded with the corresponding deconvolution layer.

In specific implementation, a neural network with a RESNET101 convolution structure is adopted in the application. The neural network with a RESNET101 convolution structure adopted in the application may improve the robustness of farmland image recognition under the condition of satisfying the accuracy of farmland boundary recognition. convolution layer and a farmland image feature map obtained by a higher deconvolution layers are superimposed in a concat (concatenation) way, and then the next layer of deconvolution processing is performed. In combination with fine information of an original image lost in the process of convolution, location information of a real farmland in the original image can be accurately restored, and the details of a farmland boundary can be more retained. The difference between the deep learning network model in the application and a general neural network structure in the conventional art is that a convolution layer is cascaded from a corresponding deconvolution layers to obtain image information lost in the convolution process.

Optionally, the convolution module adopts a hollow convolution structure.

Each of the convolution layers extract features of an image input to the convolution layer by performing an expansion operation on the image input to the convolution layer.

The application can enlarge the receptive field by using hollow convolution and minimize the loss of details of the original picture. At the same time, the use of hollow convolution can obtain a larger receptive field without increasing the consumption of computing resources, which is conducive to real-time acquisition of farmland boundaries. Optionally, an expansion coefficient of the expansion operation is set to 2.

Optionally, the deconvolution module adopts a separable convolution structure.

The application can effectively improve the running speed of the trained deep learning network model by adopting the separable convolution structure.

Optionally, a loss function of the deep learning network model is:
*loss* = -*β*Σ log *p*(*yⱼ* = 1 | *X*) - (1 - *β*)Σ log(*yⱼ* = 0 | *X*), where loss is a loss value, X is a farmland image sample marked with a target area and a non-target area, β is a ratio of the number of pixels of a target parcel in the image sample X to the total number of pixels of the image sample X, and *p*(*y*_{*j*=1} = 1| *X* ) is an output value of pixel j in the image sample X through an activation function.

Optionally, the to-be-operated area boundary acquiring module 1030 is further configured to detect the target image based on a boundary detection algorithm to determine a boundary of the area to be operated, which is contained in the target image.

Optionally, the operation that the target image is detected based on a boundary detection algorithm to determine a boundary of the area to be operated, which is

Optionally, the operation that the target image is detected based on a boundary detection algorithm to determine a boundary of the area to be operated, which is contained in the target image, includes that:
the target image is detected based on a boundary detection algorithm to determine parcel boundary points contained in the target image; and
expansion and smoothing methods are performed based on the parcel boundary points to determine a boundary of the area to be operated, which is contained in the target image.

In other embodiments, the step that a boundary of the area to be operated is obtained based on the target image includes that: the target image is detected based on a pre-set detection algorithm to determine a boundary of the area to be operated, which is contained in the target image, the pre-set detection algorithm including one or more of a color detection algorithm, a density detection algorithm, and a multi-spectral detection algorithm. For example, a rape flower parcel and a wheat parcel may be distinguished according to a color detection algorithm. For another example, a wheat parcel and a corn parcel may be distinguished according to a density detection algorithm, thereby distinguishing a boundary between different vegetation.

In the device for acquiring a boundary of an area to be operated disclosed by the embodiment of the application, a deep learning network model is trained based on an original image including an area to be operated; and then, a boundary of the area to be operated in the currently input original image is acquired by means of a deep learning network model. The problem of low efficiency in the conventional art in which a farmland image needs to be manually processed to obtain a farmland boundary is solved. Based on the deep learning network model, the image including the area to be operated is input to the pre-trained deep learning network model when needing to perform operation route planning on the area to be operated. The deep learning network model acquires the boundary of the area to be operated in the image for further use in operation route planning. The boundary of the area to be operated can be automatically recognized and operation route routing can be automatically carried out without manual participation. The boundary of the area to be operated can be acquired in real time, and the efficiency of acquiring the boundary of the area to be operated is effectively improved.

### Example implementation not part of the invention:

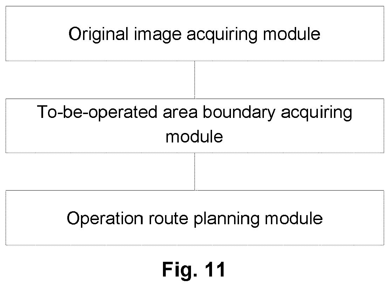

Correspondingly, referring to Fig. 11, the application also discloses a device for planning operation route, which includes: an original image acquiring module 1110, a to-be-operated area boundary acquiring module 1120, and an operation route planning module 1130.

The original image acquiring module 1110 is configured to acquire an original image for operation route planning.

The to-be-operated area boundary acquiring module 1120 is configured to acquire a boundary of an area to be operated in the original image by means of the method for acquiring a boundary of an area to be operated according to Embodiment 1 and Embodiment 2 of the application.

The operation route planning module 1130 is configured to determine, based on the acquired boundary of the area to be operated, an operation route of a mobile device in the corresponding area to be operated.

Optionally, the operation route planning module 1130 is further configured to:
superimpose the acquired boundary data of the area to be operated into an image of the area to be operated, the image of the area to be operated being an image of an area where the area to be operated is located in the original image; and
determine an operation route of a mobile device in the area to be operated based on the image of the area to be operated, superimposed with the boundary data of the area to be operated.

Optionally, two nodes at each boundary of the area to be operated are respectively a first node and a second node. The operation route planning module is further configured to:
determine any one of the boundaries as a starting boundary, and determine two nodes of the starting boundary as a starting node and an ending node;
search using the starting node as a current node, when a first node of any boundary is found to coincide with the current node, determine a second node of the boundary as a current node to continue searching, and determine an area defined by all the found boundaries as a candidate area when a second node of any boundary is found to coincide with the ending node; and
when the candidate area does not contain a boundary, determine the candidate area as an area to be operated.

Optionally, the operation route planning module 1130 is further configured to:
highlight the area to be operated;
determine, in response to a selection operation of a user, an area to be planned in the area to be operated; and
perform route planning for the area to be planned.

In the device for planning operation route disclosed by the embodiment of the application, an original image for operation route planning is acquired; a boundary of an area to be operated in the original image is acquired by means of a pre-trained deep learning network model; and an operation route of a mobile device in the corresponding area to be operated is determined based on the acquired boundary of the area to be operated. The problem of low efficiency in the conventional art in which a farmland image needs to be manually processed to obtain a farmland boundary is solved. By means of the pre-trained deep learning network model, boundary information of the area to be operated can be obtained in real time, and the operation route planning of the mobile device can be carried out in real time, which effectively improves the real-time performance and efficiency of operation route planning of the mobile device. In the related art, the area to be operated can only be surveyed and mapped first, then route planning is carried out, and the plant protection task is performed. By means of the method for planning operation route for a mobile device disclosed in the application, it is not necessary to survey and map an area to be operated in advance, an image of the area to be operated can be collected in real time, and route planning and plant protection tasks are simultaneously performed, which effectively improves the efficiency of plant protection operations.

The device embodiment of the application corresponds to the method. For the specific implementation manner of each module in the device embodiment, reference is made to the method embodiment, which will not be repeated here.

The above serial numbers of the embodiments of the application are merely for the description, and do not represent the advantages and disadvantages of the embodiments.

In the above embodiments of the application, descriptions of each embodiment are emphasized respectively, and parts which are not elaborated in detail in a certain embodiment may refer to relevant descriptions of other embodiments.

In several embodiments provided by the application, it is to be understood that the disclosed technical content may be implemented in other manners. The device embodiments described above are merely illustrative. For example, the division of the unit may be a logical function division. In actual implementation, there may be another division manner, for example, multiple units or components may be combined or integrated into another system, or some features may be ignored or not executed. In addition, the coupling or direct coupling or communication connection shown or discussed may be an indirect coupling or communication connection through some interfaces, units or modules, and may be electrical or otherwise.

The units described as separate components may or may not be physically separated, and the members displayed as units may or may not be physical units, that is, may be located in one place, or may be distributed to multiple units. Some or all of the units may be selected according to actual needs to achieve the purpose of the solution of the present embodiment.

In addition, each functional unit in each embodiment of the application may be integrated into a processing unit, each unit may also physically exist independently, and two or more than two units may also be integrated into a unit. The integrated unit may be implemented in a hardware form and may also be implemented in form of software functional unit.

The integrated unit may be stored in a computer-readable storage medium if being implemented in the form of a software functional unit and sold or used as a standalone product. Based on such understanding, the technical solution of the application, which is essential or contributes to the conventional art, may be embodied in the form of a software product. The computer software product is stored in a storage medium, including a number of instructions for causing a computer device (which may be a personal computer, a server, or a network device, etc.) to perform the methods described in various embodiments of the application. The foregoing storage medium includes: a U disk, a Read-Only Memory (ROM), a Random Access Memory(RAM), a mobile hard disk, a magnetic disk, or an optical disk, and the like, which may store a program code.

### Industrial Applicability

The solution provided by the embodiments of the application may be applied to the technical field of agricultural plant protection. In the embodiments of the application, an original image is input to a pre-set recognition model, the original image including an area to be operated; a target image output by the pre-set recognition model is acquired; and a boundary of the area to be operated is obtained based on the target image. By combining a deep learning network model, the boundary of the area to be operated in the image is acquired for further use in operation route planning. The boundary of the area to be operated can be automatically recognized and operation route routing can be automatically carried out without manual participation. The boundary of the area to be operated can be acquired in real time, and the efficiency of acquiring the boundary of the area to be operated is effectively improved.

## Claims

1. A computer-implemented method for acquiring a boundary of an area to be operated, comprising
inputting an original image to a pre-set recognition model, the original image is a farmland image, the original image comprising an area to be operated, wherein the pre-set recognition model is a deep learning network model, an original farmland image, a farmland image formed by marking a farmland area and a non-farmland area in the original farmland image are used as training samples, and supervised training is carried out to train the pre-set recognition model (S110);
acquiring a target image output by the pre-set recognition model (S120); and
obtaining a boundary of the area to be operated based on the target image (S130);
the deep learning network model comprises a convolution module, a deconvolution module, and a feature fusion module, the convolution module comprises a first number of convolution layers, and the deconvolution module comprises a second number of deconvolution layers; the convolution module is configured to extract features of the original image through the first number of convolution layers and output the features to the deconvolution module; the deconvolution module is configured to perform image feature restoration processing based on the features output by the convolution module through the second number of deconvolution layers; and the feature fusion module is configured to fuse image features obtained by performing image feature restoration processing on each layer of the deconvolution module to obtain an output image, the output image comprises the area to be operated;
wherein one convolution layer and one deconvolution layer are connected by a cascade structure, and the deconvolution module is further configured to acquire, through the second number of deconvolution layers, convolution processing information of the convolution layer cascaded with the corresponding deconvolution layer, and obtain a deconvolution result of the corresponding deconvolution layers by superimposing a deconvolution result of an upper layer of the corresponding deconvolution layers and the convolution processing information of the convolution layer cascaded with the corresponding deconvolution layer, the convolution processing information comprises: a farmland image feature map; in a process of deconvolution processing, the farmland image feature map obtained by the convolution layer and a farmland image feature map obtained by a higher deconvolution layer are superimposed, and then the next layer of deconvolution processing is performed, the cascade structure refers to a layer-by-layer connection structure between convolution layers, between deconvolution layers, and between convolution layers and corresponding deconvolution layers;
wherein obtaining the boundary of the area to be operated based on the target image comprises: detecting the target image based on a boundary detection algorithm to determine a boundary of the area to be operated, which is contained in the target image.

2. The method according to claim 1, wherein each of the convolution layers extracts features of an image input to the convolution layer by performing an expansion operation on the image input to the convolution layer.

3. The method according to claim 1, wherein the deconvolution module adopts a separable convolution structure.

4. The method according to claim 1, wherein a loss function of the deep learning network model is:
*loss* = -*β*Σ log *p*(*yⱼ* = 1 | *X*) - (1 - *β*)Σ log(*yⱼ* = 0 | *X*), where loss is a loss value, X is a farmland image sample marked with a target area and a non-target area, β is a ratio of the number of pixels of a target parcel in the image sample X to the total number of pixels of the image sample X, and *p*(*yⱼ* = 1 | *X* ) is an output value of pixel j in the image sample X through an activation function.

5. The method according to claim 1, wherein detecting the target image based on a boundary detection algorithm to determine a boundary of the area to be operated, which is contained in the target image, comprises:
detecting the target image based on a boundary detection algorithm to determine parcel boundary points contained in the target image; and
performing expansion and smoothing based on the parcel boundary points to determine a boundary of the area to be operated, which is contained in the target image.

6. The method according to claim 1, wherein obtaining a boundary of the area to be operated based on the target image comprises: detecting the target image based on a pre-set detection algorithm to determine a boundary of the area to be operated, which is contained in the target image, the pre-set detection algorithm comprising one or more of a color detection algorithm, a density detection algorithm, and a multi-spectral detection algorithm.

7. The method according to claim 1, wherein the method further comprises:
determining, based on the acquired boundary of the area to be operated, an operation route of a mobile device in the corresponding area to be operated.

8. The method according to claim 7, wherein determining, based on the acquired boundary of the area to be operated, an operation route of a mobile device in the corresponding area to be operated comprises:
superimposing the acquired boundary data of the area to be operated into an image of the area to be operated, the image of the area to be operated being an image of an area where the area to be operated is located in the original image; and
determining, based on the image of the area to be operated, superimposed with the boundary data of the area to be operated, an operation route of a mobile device in the area to be operated.

9. The method according to claim 8, wherein two nodes at each boundary of the area to be operated are respectively a first node and a second node, the method further comprising:
determining any one of the boundaries as a starting boundary, and determining two nodes of the starting boundary as a starting node and an ending node;
searching using the starting node as a current node, when a first node of any boundary is found to coincide with the current node, determining a second node of the boundary as a current node to continue searching, and determining an area defined by all the found boundaries as a candidate area when a second node of any boundary is found to coincide with the ending node; and
when the candidate area does not contain a boundary, determining the candidate area as an area to be operated.

10. The method according to claim 9, further comprising:
highlighting the area to be operated;
in response to a selection operation of a user, determining an area to be planned in the area to be operated; and
performing route planning for the area to be planned.

11. A device for acquiring a boundary of an area to be operated, comprising:
an original image input module (1010), configured to input an original image to a pre-set recognition model, the original image is a farmland image, the original image comprising an area to be operated, wherein the pre-set recognition model is a deep learning network model, an original farmland image, a farmland image formed by marking a farmland area and a non-farmland area in the original farmland image are used as training samples, and supervised training is carried out to train the pre-set recognition model;
a target image acquiring module (1020), configured to acquire a target image output by the pre-set recognition model; and
a to-be-operated area boundary acquiring module (1030), configured to obtain a boundary of the area to be operated based on the target image, the to-be-operated area boundary acquiring module (1030) is further configured to detect the target image based on a boundary detection algorithm to determine a boundary of the area to be operated, which is contained in the target image;
wherein the pre-set recognition model comprises a deep learning network model, the deep learning network model comprises a convolution module, a deconvolution module, and a feature fusion module, the convolution module comprises a first number of convolution layers, and the deconvolution module comprises a second number of deconvolution layers, wherein the convolution module is configured to extract features of the input original image through the first number of convolution layers and output the features to the deconvolution module; the deconvolution module is configured to perform image feature restoration processing based on the features output by the convolution module through the second number of deconvolution layers; and the feature fusion module is configured to fuse image features obtained by performing image feature restoration processing on each layer of the deconvolution module to obtain an output image, the output image comprises the area to be operated;
wherein the convolution layer and the deconvolution layer are connected by a cascade structure, the deconvolution module is further configured to acquire, through the second number of deconvolution layers, convolution processing information of the convolution layer cascaded with the corresponding deconvolution layer, the convolution processing information comprises: a farmland image feature map; in a process of deconvolution processing, the farmland image feature map obtained by the convolution layer and a farmland image feature map obtained by a higher deconvolution layer are superimposed, and then the next layer of deconvolution processing is performed, the cascade structure refers to a layer-by-layer connection structure between convolution layers, between deconvolution layers, and between convolution layers and corresponding deconvolution layers, and obtain a deconvolution result of the corresponding deconvolution layers by superimposing a deconvolution result of an upper layer of the corresponding deconvolution layers and the convolution processing information.

12. The device according to claim 11, wherein the device is applied in an operation route planning device, wherein the operation route planning device comprising:
the device for acquiring the boundary of the area to be operated;
an operation route planning module, configured to determine, based on the acquired boundary of the area to be operated, an operation route of a mobile device in the corresponding area to be operated.

## Patentansprüche

1. Computerimplementiertes Verfahren zur Erfassung einer Grenze eines zu betreibenden Gebietes, umfassend
Eingeben eines Originalbildes in ein voreingestelltes Erkennungsmodell, wobei das Originalbild ein Ackerlandbild ist, wobei das Originalbild ein zu betreibendes Gebiet umfasst, wobei das voreingestellte Erkennungsmodell ein Deep-Learning-Netzwerkmodell ist, wobei ein Originalackerlandbild, ein Ackerlandbild gebildet durch Markieren eines Ackerlandgebietes und ein Nichtackerlandgebiet in dem Originalackerlandbild als Trainingsproben verwendet werden und überwachtes Training durchgeführt wird, um das voreingestellte Erkennungsmodell zu trainieren (S110);
Erfassen einer Zielbildausgabe durch das voreingestellte Erkennungsmodell (S120), und
Erhalten einer Grenze des zu betreibenden Gebietes basierend auf dem Zielbild (S130);
wobei das Deep-Learning-Netzwerkmodell ein Faltungsmodul, ein Entfaltungsmodul und ein Merkmalsfusionsmodul umfasst, das Faltungsmodul eine erste Anzahl an Faltungsschichten umfasst und das Entfaltungsmodul eine zweite Anzahl an Entfaltungsschichten umfasst; das Faltungsmodul konfiguriert ist, um Merkmale des Originalbildes durch die erste Anzahl an Faltungsschichten zu extrahieren und die Merkmale an das Entfaltungsmodul auszugeben; das Entfaltungsmodul konfiguriert ist, um Bildmerkmalswiederherstellungsverarbeitung basierend auf den Merkmalen auszuführen, die durch das Faltungsmodul durch die zweite Anzahl an Entfaltungsschichten ausgegeben werden; und das Merkmalsfusionsmodul konfiguriert ist, um Bildmerkmale, die durch Ausführen von Bildmerkmalswiederherstellungsverarbeitung auf jeder Schicht des Entfaltungsmoduls erhalten werden, zu fusionieren, um ein Ausgabebild zu erhalten, wobei das Ausgabebild das zu betreibende Gebiet umfasst;
wobei eine Faltungsschicht und eine Entfaltungsschicht durch eine Kaskadenstruktur verbunden sind und das Entfaltungsmodul ferner konfiguriert ist, um durch die zweite Anzahl an Entfaltungsschichten Faltungsverarbeitungsinformationen der Faltungsschicht, die mit der entsprechenden Entfaltungsschicht kaskadiert ist, zu erfassen und ein Entfaltungsergebnis der entsprechenden Entfaltungsschichten durch Überlagern eines Entfaltungsergebnisses einer oberen Schicht der entsprechenden Entfaltungsschichten und der Faltungsverarbeitungsinformationen der Faltunsgschicht, die mit der entsprechenden Entfaltungsschicht kaskadiert ist, zu erhalten, wobei die Faltungsverarbeitungsinformationen Folgendes umfassen: eine Ackerlandbildmerkmalskarte; wobei in einem Prozess der Entfaltungsverarbeitung die Ackerlandbildmerkmalskarte, die durch die Faltungsschicht erhalten wird, und eine Ackerlandbildmerkmalskarte, die durch eine höhere Entfaltungsschicht erhalten wird, überlagert werden, und dann die nächste Schicht aus Entfaltungsverarbeitung ausgeführt wird, wobei sich die Kaskadenstruktur auf eine Schicht-um-Schicht-Verbindungsstruktur zwischen Faltungsschichten, zwischen Entfaltungsschichten und zwischen Faltungsschichten und entsprechenden Entfaltungsschichten bezieht;
wobei das Erhalten der Grenze des zu betreibenden Gebietes basierend auf dem Zielbild Folgendes umfasst: Detektieren des Zielbildes basierend auf einem Grenzdetektionsalgorithmus, um eine Grenze des zu betreibenden Gebietes zu bestimmen, die in dem Zielbild enthalten ist.

2. Verfahren nach Anspruch 1, wobei jede der Faltungsschichten Merkmale eines Bildes extrahiert, das in die Faltungsschicht eingegeben wird, indem eine Expansionsoperation an dem Bild, das in die Faltungsschicht eingegeben ist, ausgeführt wird.

3. Verfahren nach Anspruch 1, wobei das Entfaltungsmodul eine trennbare Faltungsstruktur annimmt.

4. Verfahren nach Anspruch 1, wobei eine Verlustfunktion des Deep-Learning-Netzwerkmodells wie folgt ist:
*Verlust* = -*β*Σ log *p*(*yⱼ* = 1 | *X*) - (1 - *β*)Σ log(*yⱼ* = 0 | *X*), wobei Verlust ein Verlustwert ist, X eine Ackerlandbildprobe ist, die mit einem Zielgebiet und einem Nichtzielgebiet markiert ist, β ein Verhältnis der Anzahl an Pixeln einer Zielparzelle in der Bildprobe X zu der Gesamtanzahl an Pixeln der Bildprobe X ist, und *p*(*yⱼ* = 1 | *X* ) ein Ausgabewert von Pixel j in der Bildprobe X durch eine Aktivierungsfunktion ist.

5. Verfahren nach Anspruch 1, wobei das Detektieren des Zielbildes basierend auf einem Grenzdetektionsalgorithmus, um eine Grenze des zu betreibenden Gebietes zu bestimmen, die in dem Zielbild enthalten ist, Folgendes umfasst:
Detektieren des Zielbildes basierend auf einem Grenzdetektionsalgorithmus, um Parzellengrenzpunkte, die in dem Zielbild enthalten sind, zu bestimmen; und
Ausführen von Expansion und Glättung basierend auf den Parzellengrenzpunkten, um eine Grenze des zu betreibenden Gebietes zu bestimmen, die in dem Zielbild enthalten ist.

6. Verfahren nach Anspruch 1, wobei das Erhalten einer Grenze des zu betreibenden Gebietes basierend auf dem Zielbild Folgendes umfasst: Detektieren des Zielbildes basierend auf einem voreingestellten Detektionsalgorithmus, um eine Grenze des zu betreibenden Gebietes zu bestimmen, die in dem Zielbild enthalten ist, wobei der voreingestellte Detektionsalgorithmus eines oder mehrere von einem Farbdetektionsalgorithmus, einem Dichtedetektionsalgorithmus und einem multispektralen Detektionsalgorithmus umfasst.

7. Verfahren nach Anspruch 1, wobei das Verfahren ferner Folgendes umfasst:
Bestimmen, basierend auf der erfassten Grenze des zu betreibenden Gebietes, eines Operationsweges eines mobilen Geräts in dem entsprechenden zu betreibenden Gebiet.

8. Verfahren nach Anspruch 7, wobei das Bestimmen, basierend auf der erfassten Grenze des zu betreibenden Gebietes, eines Operationsweges eines mobilen Geräts in dem entsprechenden zu betreibenden Gebiet Folgendes umfasst:
Überlagern der erfassten Grenzdaten des zu betreibenden Gebietes in ein Bild des zu betreibenden Gebietes, wobei das Bild des zu betreibenden Gebietes ein Bild eines Gebietes ist, in dem sich das zu betreibende Gebiet in dem Originalbild befindet; und
Bestimmen, basierend auf dem Bild des zu betreibenden Gebietes, das mit den Grenzdaten des zu betreibenden Gebietes überlagert ist, eines Operationsweges eines mobilen Geräts in dem zu betreibenden Gebiet.

9. Verfahren nach Anspruch 8, wobei zwei Knoten an jeder Grenze des zu betreibenden Gebietes jeweils ein erster Knoten und ein zweiter Knoten sind, wobei das Verfahren ferner Folgendes umfasst:
Bestimmen von einer beliebigen der Grenzen als Startgrenze und Bestimmen von zwei Knoten der Startgrenze als Startknoten und Endknoten;
Suchen unter Verwendung des Startknotens als aktuellen Knoten, wenn ein erster Knoten einer beliebigen Grenze gefunden wird, der mit dem aktuellen Knoten übereinstimmt, Bestimmen eines zweiten Knotens der Grenze als aktuellen Knoten, um Suchen fortzusetzen, und Bestimmen eines Gebietes, das durch alle gefundenen Grenzen definiert ist, als Kandidatengebiet, wenn ein zweiter Knoten einer beliebigen Grenze gefunden wird, der mit dem Endknoten übereinstimmt; und
wenn das Kandidatengebiet keine Grenze enthält, Bestimmen des Kandidatengebietes als zu betreibendes Gebiet.

10. Verfahren nach Anspruch 9, ferner umfassend:
Hervorheben des zu betreibenden Gebietes;
als Reaktion auf eine Auswahloperation eines Benutzers, Bestimmen eines zu planenden Gebietes in dem zu betreibenden Gebiet; und
Ausführen von Wegplanung für das zu planende Gebiet.

11. Gerät zum Erfassen einer Grenze eines zu betreibenden Gebietes, umfassend:
ein Originalbildeingabemodul (1010), das konfiguriert ist, um ein Originalbild in ein voreingestelltes Erkennungsmodell einzugeben, wobei das Originalbild ein Ackerlandbild ist, wobei das Originalbild ein zu betreibendes Gebiet umfasst, wobei das voreingestellte Erkennungsmodell ein Deep-Learning-Netzwerkmodell ist, wobei ein Originalackerlandbild, ein Ackerlandbild gebildet durch Markieren eines Ackerlandgebietes und ein Nichtackerlandgebiet in dem Originalackerlandbild als Trainingsproben verwendet werden und überwachtes Training durchgeführt wird, um das voreingestellte Erkennungsmodell zu trainieren;
ein Zielbilderfassungsmodul (1020), das konfiguriert ist, um ein Zielbild zu erfassen, das durch das voreingestellte Erkennungsmodell ausgegeben wird; und
ein Modul zum Erfassen der Grenze des zu betreibenden Gebietes (1030), das konfiguriert ist, um eine Grenze des zu betreibenden Gebietes basierend auf dem Zielbild zu erhalten, wobei das Modul zum Erfassen der Grenze des zu betreibenden Gebietes (1030) ferner konfiguriert ist, um das Zielbild basierend auf einem Grenzdetektionsalgorithmus zu detektieren, um eine Grenze des zu betreibenden Gebietes zu bestimmen, die in dem Zielbild enthalten ist;
wobei das voreingestellte Erkennungsmodell ein Deep-Learning-Netzwerkmodell umfasst, das Deep-Learning-Netzwerkmodell ein Faltungsmodul, ein Entfaltungsmodul und ein Merkmalsfusionsmodul umfasst, das Faltungsmodul eine erste Anzahl an Faltungsschichten umfasst und das Entfaltungsmodul eine zweite Anzahl an Entfaltungsschichten umfasst, wobei das Faltungsmodul konfiguriert ist, um Merkmale des eingegebenen Originalbildes durch die erste Anzahl an Faltungsschichten zu extrahieren und die Merkmale an das Entfaltungsmodul auszugeben; das Entfaltungsmodul konfiguriert ist, um Bildmerkmalswiederherstellungsverarbeitung basierend auf den Merkmalen, die durch das Faltungsmodul durch die zweite Anzahl an Entfaltungsschichten ausgegeben werden, auszuführen; und das Merkmalsfusionsmodul konfiguriert ist, um Bildmerkmale, die durch Ausführen von Bildmerkmalswiederherstellungsverarbeitung auf jeder Schicht des Entfaltungsmoduls erhalten werden, zu fusionieren, um ein Ausgabebild zu erhalten, wobei das Ausgabebild das zu betreibende Gebiet umfasst;
wobei die Faltungsschicht und die Entfaltungsschicht durch eine Kaskadenstruktur verbunden sind, wobei das Entfaltungsmodul ferner konfiguriert ist, um durch die zweite Anzahl an Entfaltungsschichten Faltungsverarbeitungsinformationen der Faltungsschicht, die mit der entsprechenden Entfaltungsschicht kaskadiert ist, zu erfassen, wobei die Faltungsverarbeitungsinformationen Folgendes umfassen: eine Ackerlandbildmerkmalskarte; wobei in einem Prozess der Entfaltungsverarbeitung die Ackerlandbildmerkmalskarte, die durch die Faltungsschicht erhalten wird, und eine Ackerlandbildmerkmalskarte, die durch eine höhere Entfaltungsschicht erhalten wird, überlagert werden, und dann die nächste Schicht aus Entfaltungsverarbeitung durchgeführt wird, wobei sich die Kaskadenstruktur auf eine Schicht-für-Schicht-Verbindungsstruktur zwischen Faltungsschichten, zwischen Entfaltungsschichten und zwischen Faltungsschichten und entsprechenden Entfaltungsschichten bezieht, und ein Entfaltungsergebnis der entsprechenden Entfaltungsschichten durch Überlagern eines Entfaltungsergebnisses einer oberen Schicht der entsprechenden Entfaltungsschichten und der Faltungsverarbeitungsinformationen zu erhalten.

12. Gerät nach Anspruch 11, wobei das Gerät in einem Gerät zur Operationswegplanung angewendet wird, wobei das Gerät zur Operationswegplanung Folgendes umfasst:
das Gerät zum Erfassen der Grenzen des zu betreibenden Gebietes;
ein Modul zur Operationswegplanung, das konfiguriert ist, um basierend auf der erfassten Grenze des zu betreibenden Gebietes einen Operationsweg eines mobilen Geräts in dem entsprechenden zu betreibenden Gebiet zu bestimmen.

## Revendications

1. Procédé mis en oeuvre par ordinateur permettant l'acquisition d'une limite d'une zone à exploiter, comprenant :
l'entrée d'une image d'origine dans un modèle de reconnaissance prédéfini, l'image d'origine est une image de terres agricoles, l'image d'origine comprenant une zone à exploiter, dans lequel le modèle de reconnaissance prédéfini est un modèle de réseau d'apprentissage profond, une image de terres agricoles d'origine, une image de terres agricoles formée en marquant une zone de terres agricoles et une zone de terres non agricoles dans l'image de terres agricoles d'origine sont utilisées comme échantillons d'apprentissage, et un apprentissage supervisé est effectué pour entraîner le modèle de reconnaissance prédéfini (S110) ;
l'acquisition d'une image cible sortie par le modèle de reconnaissance prédéfini (S120) ; et
l'obtention d'une limite de la zone à exploiter sur la base de l'image cible (S130) ;
le modèle de réseau d'apprentissage profond comprend un module de convolution, un module de déconvolution et un module de fusion de caractéristiques, le module de convolution comprend un premier nombre de couches de convolution et le module de déconvolution comprend un second nombre de couches de déconvolution ; le module de convolution est configuré pour extraire des caractéristiques de l'image d'origine à travers le premier nombre de couches de convolution et sortir les caractéristiques au module de déconvolution ; le module de déconvolution est configuré pour effectuer un traitement de restauration de caractéristiques d'image sur la base des caractéristiques sorties par le module de convolution à travers le second nombre de couches de déconvolution ; et le module de fusion de caractéristiques est configuré pour fusionner des caractéristiques d'image obtenues en effectuant un traitement de restauration de caractéristiques d'image sur chaque couche du module de déconvolution pour obtenir une image de sortie, l'image de sortie comprend la zone à exploiter ;
dans lequel une couche de convolution et une couche de déconvolution sont connectées par une structure en cascade, et le module de déconvolution est en outre configuré pour acquérir, à travers le second nombre de couches de déconvolution, des informations de traitement de convolution de la couche de convolution en cascade avec la couche de déconvolution correspondante, et obtenir un résultat de déconvolution des couches de déconvolution correspondantes en superposant un résultat de déconvolution d'une couche supérieure des couches de déconvolution correspondantes et les informations de traitement de convolution de la couche de convolution en cascade avec la couche de déconvolution correspondante, les informations de traitement de convolution comprennent : une carte de caractéristiques d'image de terres agricoles ; dans un processus de traitement de déconvolution, la carte de caractéristiques d'image de terres agricoles obtenue par la couche de convolution et une carte de caractéristiques d'image de terres agricoles obtenue par une couche de déconvolution supérieure sont superposée, puis la couche suivante de traitement de déconvolution est effectuée, la structure en cascade fait référence à une structure de connexion couche par couche entre les couches de convolution, entre les couches de déconvolution et entre les couches de convolution et les couches de déconvolution correspondantes ;
dans lequel l'obtention de la limite de la zone à exploiter sur la base de l'image cible comprend : la détection de l'image cible sur la base d'un algorithme de détection de limite pour déterminer une limite de la zone à exploiter, qui est contenue dans l'image cible.

2. Procédé selon la revendication 1, dans lequel chacune des couches de convolution extrait des caractéristiques d'une image entrée dans la couche de convolution en effectuant une opération d'expansion sur l'image entrée dans la couche de convolution.

3. Procédé selon la revendication 1, dans lequel le module de déconvolution adopte une structure de convolution séparable.

4. Procédé selon la revendication 1, dans lequel une fonction de perte du modèle de réseau d'apprentissage profond est :
*loss* = -*β*Σ log *p*(*yⱼ* = 1 | *X*) - (1 - *β*)Σ log(*yⱼ* = 0 | *X*), où loss (perte) est une valeur de perte, X est un échantillon d'image de terres agricoles marqué d'une zone cible et d'une zone non cible, β est un rapport entre le nombre de pixels d'une parcelle cible dans l'échantillon d'image X et le nombre total de pixels de l'échantillon d'image X, et *p*(*yⱼ* = 1 | *X* ) est une valeur de sortie du pixel j dans l'échantillon d'image X via une fonction d'activation.

5. Procédé selon la revendication 1, dans lequel la détection de l'image cible sur la base d'un algorithme de détection de limite pour déterminer une limite de la zone à exploiter, qui est contenue dans l'image cible, comprend :
la détection de l'image cible sur la base d'un algorithme de détection de limite pour déterminer des points de limites de parcelle contenus dans l'image cible ; et
l'exécution d'une expansion et d'un lissage en fonction des points de limite de parcelle pour déterminer une limite de la zone à exploiter, qui est contenue dans l'image cible.

6. Procédé selon la revendication 1, dans lequel l'obtention d'une limite de la zone à exploiter sur la base de l'image cible comprend : la détection de l'image cible sur la base d'un algorithme de détection prédéfini pour déterminer une limite de la zone à exploiter, qui est contenue dans l'image cible, l'algorithme de détection prédéfini comprenant un ou plusieurs parmi un algorithme de détection de couleur, un algorithme de détection de densité et un algorithme de détection multi-spectrale.

7. Procédé selon la revendication 1, dans lequel le procédé comprend en outre :
la détermination, sur la base de la limite acquise de la zone à exploiter, d'un itinéraire d'exploitation d'un dispositif mobile dans la zone à exploiter correspondante.

8. Procédé selon la revendication 7, dans lequel la détermination, sur la base de la limite acquise de la zone à exploiter, d'un itinéraire d'exploitation d'un dispositif mobile dans la zone à exploiter correspondante comprend :
la superposition des données de limite acquises de la zone à exploiter dans une image de la zone à exploiter, l'image de la zone à exploiter étant une image d'une zone où la zone à exploiter est située dans l'image d'origine ; et
la détermination, sur la base de l'image de la zone à exploiter, en superposition aux données de limites de la zone à exploiter, d'un itinéraire d'exploitation d'un dispositif mobile dans la zone à exploiter.

9. Procédé selon la revendication 8, dans lequel deux noeuds à chaque limite de la zone à exploiter sont respectivement un premier noeud et un second noeud, le procédé comprenant en outre :
la détermination de l'une quelconque des limites comme limite de départ, et la détermination de deux noeuds de la limite de départ comme noeud de départ et noeud de fin ;
la recherche en utilisant le noeud de départ comme noeud actuel, lorsqu'un premier noeud d'une quelconque limite est trouvé coïncidant avec le noeud actuel, la détermination d'un second noeud de la limite comme noeud actuel pour continuer la recherche, et la détermination d'une zone définie par toutes les limites trouvées comme zone candidate lorsqu'un second noeud d'une quelconque limite est trouvé coïncidant avec le noeud final ; et
lorsque la zone candidate ne contient pas de limite, la détermination de la zone candidate comme une zone à exploiter.

10. Procédé selon la revendication 9, comprenant en outre :
la mise en surbrillance de la zone à exploiter ;
en réponse à une opération de sélection d'un utilisateur, la détermination d'une zone à planifier dans la zone à exploiter ; et
l'exécution de la planification d'itinéraire pour la zone à planifier.

11. Dispositif permettant l'acquisition d'une limite d'une zone à exploiter, comprenant :
un module d'entrée d'image d'origine (1010), configuré pour entrer une image d'origine dans un modèle de reconnaissance prédéfini, l'image d'origine est une image de terres agricoles, l'image d'origine comprenant une zone à exploiter, dans lequel le modèle de reconnaissance prédéfini est un modèle de réseau d'apprentissage profond, une image de terres agricoles d'origine, une image de terres agricoles formée en marquant une zone agricole et une zone de terres non agricoles dans l'image de terres agricoles d'origine sont utilisées comme échantillons d'apprentissage, et un apprentissage supervisé est effectué pour entraîner le modèle de reconnaissance prédéfini ;
un module d'acquisition d'image cible (1020), configuré pour acquérir une image cible sortie par le modèle de reconnaissance prédéfini ; et
un module d'acquisition de limite de zone à exploiter (1030), configuré pour obtenir une limite de la zone à exploiter sur la base de l'image cible, le module d'acquisition de limite de zone à exploiter (1030) est en outre configuré pour détecter l'image cible sur la base d'un algorithme de détection de limite pour déterminer une limite de la zone à exploiter, qui est contenue dans l'image cible ;
dans lequel le modèle de reconnaissance prédéfini comprend un modèle de réseau d'apprentissage profond, le modèle de réseau d'apprentissage profond comprend un module de convolution, un module de déconvolution et un module de fusion de caractéristiques, le module de convolution comprend un premier nombre de couches de convolution, et le module de déconvolution comprend un second nombre de couches de déconvolution, dans lequel le module de convolution est configuré pour extraire des caractéristiques de l'image d'origine entrée à travers le premier nombre de couches de convolution et sortir les caractéristiques au module de déconvolution ; le module de déconvolution est configuré pour effectuer un traitement de restauration de caractéristiques d'image sur la base des caractéristiques sorties par le module de convolution à travers le second nombre de couches de déconvolution ; et le module de fusion de caractéristiques est configuré pour fusionner des caractéristiques d'image obtenues en effectuant un traitement de restauration de caractéristiques d'image sur chaque couche du module de déconvolution pour obtenir une image de sortie, l'image de sortie comprenant la zone à exploiter ;
dans lequel la couche de convolution et la couche de déconvolution sont connectées par une structure en cascade, le module de déconvolution est en outre configuré pour acquérir, à travers le second nombre de couches de déconvolution, des informations de traitement de convolution de la couche de convolution en cascade avec la couche de déconvolution correspondante, les informations de traitement de convolution comprennent : une carte de caractéristiques d'image de terres agricoles ; dans un processus de traitement de déconvolution, la carte de caractéristiques d'image de terres agricoles obtenue par la couche de convolution et une carte de caractéristiques d'image de terres agricoles obtenue par une couche de déconvolution supérieure sont superposées, puis la couche suivante de traitement de déconvolution est effectuée, la structure en cascade fait référence à une structure de connexion couche par couche entre les couches de convolution, entre les couches de déconvolution et entre les couches de convolution et les couches de déconvolution correspondantes, et obtenir un résultat de déconvolution des couches de déconvolution correspondantes en superposant un résultat de déconvolution d'une couche supérieure des couches de déconvolution correspondantes et les informations de traitement de convolution.

12. Dispositif selon la revendication 11, dans lequel le dispositif est appliqué dans un dispositif de planification d'itinéraire d'exploitation, dans lequel le dispositif de planification d'itinéraire d'exploitation comprend :
le dispositif d'acquisition de la limite de la zone à exploiter ;
un module de planification d'itinéraire d'exploitation, configuré pour déterminer, sur la base de la limite acquise de la zone à exploiter, un itinéraire d'exploitation d'un dispositif mobile dans la zone correspondante à exploiter.
